# EUROPEAN PATENT APPLICATION

(11) **EP 2 899 711 A1**
(43) Date of publication of application: **29.07.2015**
(21) Application number: 14152548.5
(22) Date of filing: 24.01.2014
(51) Int. Cl.: G09B 23/28

(54) **A user interface device for a surgical simulation system**

(71) Applicant: Surgical Science Sweden AB, 413 14 Göteborg (SE)
(72) Inventor: Larsson, Anders, 431 59 Mölndal (SE); Johansson, Christer, 424 71 Olofstorp (SE); Nyström, Mattias, 412 65 Göteborg (SE)
(74) Representative: Edlund, Fabian

(57) **Abstract**

A user interface for a tactile feedback endoscopic simulation executed on a computer system (3) comprising an instrument (5) having a handle (7) and a tubular member (8), a frame (10), a support arrangement (11), being rotatably arranged in relation to said frame, and being arranged to receive said tubular member along an axis A. The support arrangement comprises two friction wheels (19a, 19b), in frictional contact with opposing sides of said tubular member and a controller (9) arranged to receive a desired tactile feedback from said computer system and a sensor signal from said force sensor representative of an applied force, and arranged to control an actuator to operate said friction wheels to provide said desired tactile feedback.

The system can provide a resistance more closely corresponding to the resistance felt during actual surgery, down to no resistance or even a pull on the instrument.

## Description

### Field of the invention

The present invention relates generally to a user interface device for a surgical simulation system, and more specifically to an interface for an endoscopic simulator.

### Background of the invention

In recent years, systems for surgical simulations have become increasingly more used, in order to train physicians various surgical procedures without putting live patients at risk. In particular in the field of minimally-invasive surgery, such as laparoscopy, endoscopy, colonoscopy, etc., such simulation systems have gained significant acceptance. During minimal-invasive surgery the physician typically relies on an image on a screen rather than on an actual view of the patient, and with powerful image rendering available today, such an image can be simulated with a very high degree of realism.

During actual surgery the instrument, such as a Pentax i10 series endoscope, comprises a handle with controls, signal interfaces and an insertion tube. The insertion tube of the instrument is maneuvered into the body of the patient by longitudinal and rotational movement of the instrument, as well as manipulation of the controls. There is natural resistance as the insertion tube is maneuvered in and among the walls of the internal organs. A system for simulating endoscopic surgery preferably comprises a similar interface and a fixture for receiving the interface when in use. The handle may comprise controls similar to the actual surgical instrument, which via a signal interface provide input to a simulation system that renders an operator viewable image of a simulated surgical procedure, wherein manipulation of the controls result in a rendered simulated response corresponding to manipulation of the controls of an actual surgical instrument. The maneuvering of the tube is detected by sensors in the fixture which provide the simulation system with signals corresponding to the longitudinal and rotational movements of the instrument. In such a fixture there are preferably also actuators which provide the operator with a tactile feedback emulating the resistance occurring in actual surgery.

An example of such an apparatus is described in US 6,926,531, wherein an apparatus for use in training an operator in the use of an endoscope system is disclosed. In this apparatus a rotatable disc is arranged with a plurality of rollers to surround the axis of rotation of the disc. One force feedback motor is provided to resist rotation of the disc and further force feedback motors are provided to resist rotation of rollers. Similar separate arrangements of rollers are provided together with sensors claimed to provide independent linear and rotary detection. Accordingly, the apparatus is claimed to be less sensitive to detection loss which may occur when force feedback is provided and the insertion tube is maneuvered in a manner such that the rollers slip.

Another example is disclosed in US 2012/0178062 where a combination of electrical motors and passive brakes are used to cover a range of forces. The electrical motors are used to simulate the lower ranged of forces and a power brake and a mechanical brake are used if respectively torques or forces applied on the endoscope are too strong to be maintained by the motors. This design allows motion in one direction while impeding the other.

The arrangement of individual sensor- and feedback mechanisms requires a relatively large amount of space, leading to a bulky and possibly expensive design. Furthermore, there is also a problem of friction induced by each rotating component, resulting in an inherent resistance even when the force feedback motors are not operated.

### Summary of the invention

It is an object of the present invention to address the shortcomings of the prior art, and to provide an improved user interface which is robust in function and cost effective to manufacture. Another object is to provide a user interface which in use provides the user with an experience more closely resembling that of an actual surgical instrument.

According to an embodiment of the invention, these and other objects are achieved by a user interface for a tactile feedback endoscopic simulation executed on a computer system comprising an instrument having a handle and a tubular member, a frame, a support arrangement, being rotatably arranged in relation to the frame, and being arranged to receive the tubular member along an axis A. The support arrangement comprises two friction wheels, in frictional contact with opposing sides of the tubular member when the tubular member is received in the support arrangement, a first rotational sensor, arranged to detect a rotation of at least one of the two friction wheels, and at least one actuator which is operatively connected to the friction wheels. The user interface further comprising a force sensor, arranged to detect a force between the support arrangement and the frame, and a controller arranged to receive a desired tactile feedback from the computer system and a sensor signal from said force sensor representative of an applied force, and arranged to control the actuator to operate the friction wheels to provide the desired tactile feedback.

The desired force feedback that should be experienced by the user is determined in the simulation executed in the computer system. The controller controls the actuator to provide this feedback force, but there is also a resistance created by the friction wheels. As the operator maneuvers the instrument, the actual force exerted on the frame is detectable by the force sensor, and based on this feeback, the controller can adjust the force applied by the actuators accordingly. The system will therefore be able to provide a resistance more closely corresponding to the resistance felt during actual surgery, down to no resistance or even a pull on the instrument.

The arrangement according to the invention enables compensation of any friction along the axis A, and therefore allows application of a comparably large bilateral force to improve friction between the tubular member and the friction wheels. This reduces the risk of slip, while allowing the operator to experience low or no resistance since the actuators can assist movement of the instrument in the direction of a detected force.

Each friction wheel may be arranged on a pivotable arm, so that said friction wheel is movable into contact with said tubular member. The support arrangement can thereby accept a variety of diameters on the tubular member, and thicker tubular members which are generally used in endoscopy with higher level of axial forces will advantageously be sandwiched between the friction wheels with a higher bilateral pinching force.

According to one embodiment, each pivotable arm is operatively connected to a linkage mechanism comprising a slider being slidably arranged along said axis A, and two link brackets, each link bracket having a first end pivotally connected with said slider, and a second end pivotally connected to one of said arms, respectively, so that, when the slider is moved along axis A, the friction wheels are pressed against the tubular member.

Such a linkage mechanism ensures a symmetrical force exerted by either friction wheel. The force can be adjusted by adjusting the slider. Alternatively, the slider may be spring loaded, which allows self adjustment of the pressure of the friction wheels. Furthermore, such a mechanism may enable adjustment to wear of the tubular member.

This linkage mechanism can be advantageous also independently from the present invention, i.e. also in a user interface without the above disclosed force feedback control. The linkage mechanism should thus be considered a separate inventive concept, which may be made subject of a divisional patent application.

The inventors realized that a constant pressure of the friction wheels to the tubular member results in varying resistance over the length of the tubular member due to varying wear, production tolerances and/or material tolerances. A spring loaded or dynamic force exerted by the friction wheels on the tubular member according to at least one embodiment of the invention may take account for such differences.

According to one embodiment of the invention the frame may further comprise a base and a cradle for suspending the support arrangement, wherein the force sensor is provided between the base and the cradle.

The at least one actuator may advantageously be connected to at least one of the pair of friction wheels with at least one transmission, to enable a larger torque to be applied.

The invention also relates to a method for controlling haptic feedback in a system for simulating an endoscopic procedure, comprising determing a desired feedback force, detecting an actual force applied to the tubular member, comparing the desired feedback force with the actual force, to provide an error signal, and based on the error signal, controlling an actuator operatively connected to friction wheels in frictional contact with the tubular member, to thereby provide the desired feedback force.

### Brief Description of the Drawings

The present invention will be described in more detail with reference to the appended drawings, showing currently preferred embodiments of the invention.
Figure 1 is a schematic view of a surgical simulation system with a user interface device according to an exemplary embodiment of the invention.
Figure 2 is a schematic perspective view of the support arrangement in figure 1.
Figure 3 is a detail side view of the support arrangement in figure 1.

### Detailed Description

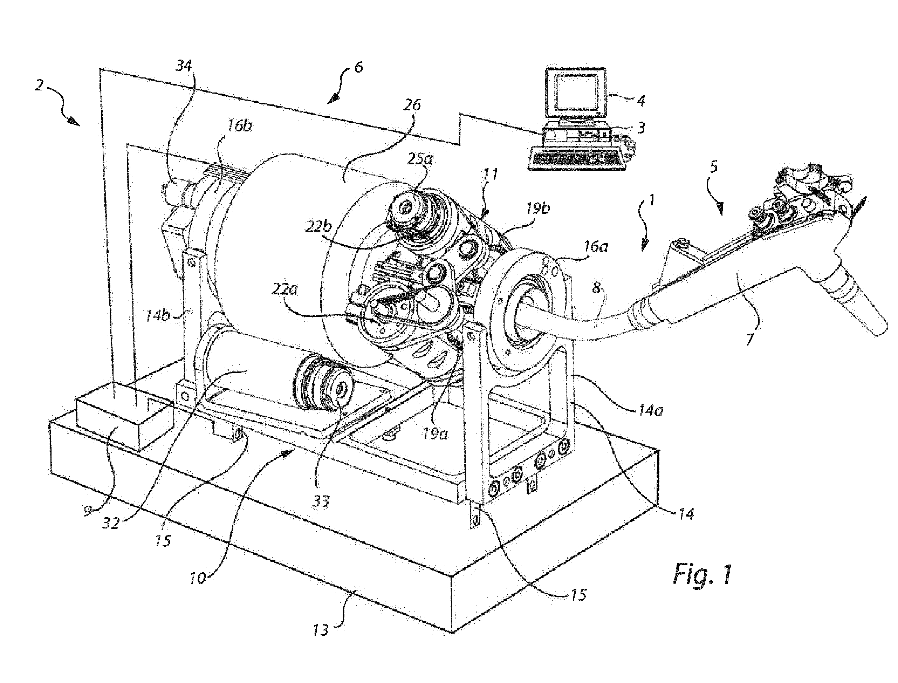

Figure 1 shows a user interface device 1 according to an embodiment of the present invention, schematically connected as part of a system for surgical simulation. The simulation system comprises computer system 3 running software for simulating the surgical procedure, here an endoscopic procedure, and a display 4 for displaying a visualization of the simulated procedure to a user. The user interface device 1 is connected to the computer system 3, and allows a user to provide input to the system 3, thereby interacting with the simulation visualized on the display device 4.

The user interface 1 comprises a movable instrument 5 comprising a handle 7 and a tubular member 8. The instrument is intended to resemble an actual endoscopic instrument, such as a Olympus GIF-HQ190, and the tubular member 8 is similar to or may alternatively be an actual surgical insertion tube, such as the insertion tubes used with Olympus GIF-HQ190 series endoscopic instruments. The user interface further comprises a signal interface 6 into which the tubular member 8 is insertable.

Two friction wheels 19a, 19b are biased against the tubular member 8, with sufficient force to avoid slipping. The friction wheels are actuated by actuators 22a, 22b, and their rotation is detected by at least one rotational sensor 25a. The sensors and actuators are connected to a controller 9.

As shown in figure 1, the signal interface 6 comprises a frame 10 suspending a rotatable support arrangement 11 for receiving the tubular member 8. The frame 10 has a base 13 which acts as a foundation for a cradle 14 which is suspended on the base 13. At least one force sensor 15, such as a strain gauge, is arranged to detect a force between the cradle 14 and the base 13. Each sensor 15 is connected to the controller 9. A signal from each force sensor 15 is primarily representative of forces exerted in the longitudinal direction of the tubular member 8.

In use, the computer system 3 executes simulation software for simulating a surgical procedure. The current state of the simulation is based on parameters that are pre-loaded into the simulation software and of the actions of an operator since the start of the simulation. Parameters could for example be the type of operation, such as gastrointestinal surgery or other endoscopic surgery, providing a virtual coordinate system with boundaries and properties corresponding to the organs and cavities in the body of a virtual patient. Previous actions of the operator provide, for example, the current location and heading of a virtual endoscopic tube in this coordinate system. The operator's maneuvering of the instrument 5 results in an input to the simulation.

More specifically, translational movement of the instrument 5 is detected by the sensors 25a, 25b, and communicated to the computer 3 via the controller 9. Based on the simulation executed in the computer 3, a desired tactile force (or resistance) is calculated, and returned to the controller 9. The controller interacts with the actuators 22a, 22b to provide force feedback to the user. The actuators may provide resistance in both directions, as well as immobility (hard brake).

The controller further receives a signal from the force sensor 15 corresponding to the actual force applied to the cradle 14. This force is the force that the operator is actually experiencing. The controller is configured to implement a suitable control scheme, e.g. proportional-integral-derivative control, to control the electrical power output to the actuators so that the force detected by sensor 15 is equal to the desired tactile force.

It is important to note that the friction wheels 19a, 19b themselves may cause a non-negligible resistance force. Therefore, during some periods of the simulation, the required resistance (from the simulation) will be smaller than the friction force created by the friction wheels. During such periods, the controller will control the actuators 22a, 22b to assist the movement of the instrument 5. During other periods, the required resistance will be greater than the friction force created by the friction wheels. During such periods, the controller will control the actuators to increase the resistive force.

Of course, it is also possible that the required resistance precisely matches the force created by the friction wheels, in which case the actuators are controlled to be neutral.

Details of the signal interface, and the arrangement of sensors and actuators, will now be described in more detail.

In the illustrated example, the cradle 14 comprises two vertical members 14a, 14b which suspend the support arrangement 11 between a pair of ball bearings 16a, 16b, so that it is rotatable around an axis A. The ball bearings 16a, 16b are hingedly connected to the vertical members 14a, 14b, which in combination with a hinged connection of one of the vertical members 14b proximal to the base allows a larger tolerance in misalignment from the axis A when an operator maneuvers the instrument 5.

The axis A is arranged at an angle to a plane defined by the base 13 in the exemplary embodiment of the invention shown in figure 1. This angled suspension of the support arrangement is provided for ergonomic reasons in order to improve working conditions for an operator of the simulation system which may be more beneficial than if the support arrangement 11 would only be available in for example a horizontal alignment. However, the simulation system is equally suited for a horizontal alignment.

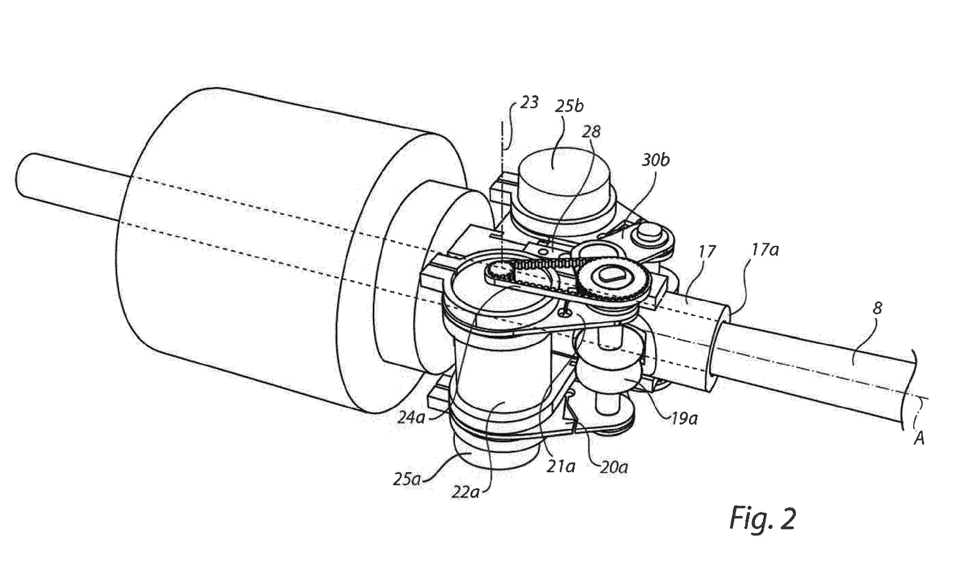

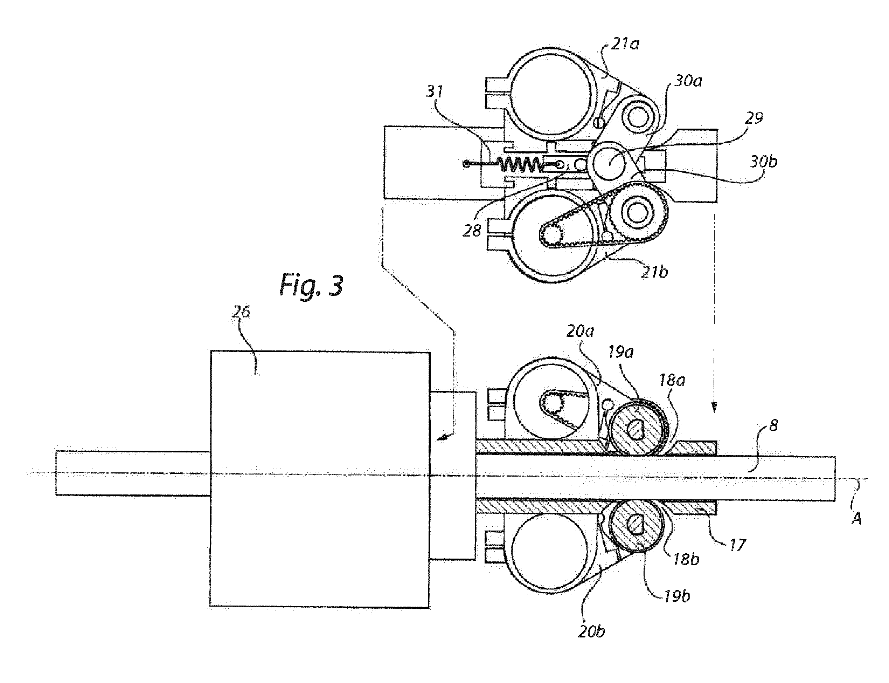

As illustrated in more detail in figures 2 and 3, the support arrangement 11 in figure 1 further comprises a tube 17 connected between the bearings 16a, 16b. A first end 17a of the tube 17 is arranged to receive the tubular member 8 of the instrument 5.There is an opening 18a, 18b on each lateral side of the tube proximal to the first end 17a at which openings a pair of friction wheels 19a, 19b are arranged. The rotational axis of each wheel is perpendicular to the axis A. The friction wheels 19a, 19b preferably have a groove over the circumference to have a larger surface area in contact with the tubular member 8, and there may also be radial slits or ridges to improve the friction.

Each friction wheel 19a, 19b is arranged on a pivotable arm formed by a pair of levers 20a, 21 a, 20b, 21 b. The arm allows movement of the friction wheel to make contact with the tubular member 8 through the respective opening 18a, 18b. When the tubular member 8 is inserted into the tube 17, the two friction wheels 19a, 19b will sandwich the tubular member 8. The respective pairs of levers 20a, 21 a, 20b, 21 b resiliently press the friction wheels 19a, 19b against the tube 8, providing a flexibility of the friction wheels 19a, 19b to move laterally in relation to the axis A in a resilient manner. The levers 20a, 20b, 21 a, 21 b are arranged at a sufficient distance from the tube 17 to avoid collision.

Each friction wheel 19a, 19b is connected to an actuator, such as an electric motor 22a, 22b. The connection may be a suitable drive belt 24a, 24b. In the illustrated example, the motors 22a, 22b are arranged with their drive axis 23a, 23b aligned with the rotation axis of the levers 20a, 20b, so that the movement of each friction wheel 19a, 19b describes part of an arched trajectory with a centre of rotation at the drive axle 23a, 23b of the respective electric motor 22a, 22b. The fixed distance between the friction wheels 19a, 19b and the motors 22a, 22b will ensure that the tension of the drive belts 24a, 24b is consistent.

In figure 1 the drive belt is connected to a gear wheel both at the motor and at the friction wheel, the gears in this exemplary embodiment being larger at the friction wheel than at the motor in order to provide a predetermined transmission ratio.

A rotational sensor 25a, 25b is arranged to detect rotation of each friction wheel 19a, 19b. The sensors 25a, 25b are here arranged at the drive axle 23a, 23b of each motor 22a, 22b to provide a signal indicative of the rotation of the friction wheels 19a, 19b and inherently the linear movement of the tubular member 8.

Primarily with reference to figures 2 and 3 a linkage mechanism providing resilient pretention for the friction wheels to tubular member will be described. The linkage mechanism comprises a slider 28 slidably arranged along the tube 17. The slider 28 has a pivot 29 on which a pair of link brackets 30a, 30b are pivotally arranged. The two brackets 30a, 30b are also each pivotally connected to the rotational axle of the friction wheels 19a, 19b, so that each friction wheel 19a, 19b is connected to the slider 28. Finally, the slider 28 is connected to the support arrangement 11 with a spring element, such as a coil spring 31.

As the slider 28 is pulled along the tube 17, the link brackets 30a, 30b will laterally move the friction wheels 19a, 19b in a cooperative manner, pressing them towards the tubular member 8 inside the tube in a spring loaded manner.

It is noted that there is preferably an identical linkage mechanism on the opposite side of the tube 17, although this is not clearly visible in figures 2 and 3. By having identical linkage mechanisms on both sides of the tube 17, an even distribution of forces may be achieved.

The pinching frictional grip of the friction wheels 19a, 19b on the tubular member 8, provides a translation of rotational movement of the tubular member 8 to the rotatable support arrangement 11. In order to provide force feedback in the rotational direction an actuator 32 is arranged on the frame 10, connected to a cog wheel (not shown) arranged around the tube 17 with a drive belt (not shown). A further rotational sensor 33 is also arranged to detect the rotational movement B of the support arrangement 11 around axis A. The rotational sensor 33 may advantageously be arranged on the drive axle of the actuator 32.

Additionally, a further rotational sensor 34 may be arranged in contact with the end of the tubular member 8 extending outside the tube 17 (when sufficiently inserted). The rotational sensor 34 is arranged to detect rotation of the tubular member 8, which may additionally be used in comparison with signals from the rotational sensor 33 to detect slip between the tubular member 8 and the friction wheels 16a, 16b.

There is a need to provide electrical connection between the motors 22a, 22b, sensors 25a, 25b and a controller 27 with minimal wear on wiring caused by the rotation of the support arrangement, this may be solved for example by providing sufficient wiring to allow some rotations, or a wire harness coiled in a similar manner to a clock spring. However, as such a solution limits the number rotations a rotating slip ring connector 26 is arranged around the tube 17 to provide an electrical interface fixed relative to the support arrangement 11 interconnected to another electrical interface fixed relative to the frame 10.

The person skilled in the art realizes that the present invention by no means is limited to the preferred embodiments described above. On the contrary, many modifications and variations are possible within the scope of the appended claims. For example, other types of sensors and encoders may be used, for detection of rotation as well as translation. For example, hall effect sensors or piezoelectric sensors. Further, the instrument 5 represents an actual surgical instrument for use in endoscopic surgery, as such there are several varieties of endoscopic surgical instruments that may be emulated. A person skilled in the art will realize that the invention according to at least one embodiment will accept a certain variation in for example insertion tube diameter or that the invention according to at least one embodiment may be adapted to a specific insertion tube. Furthermore, while the handle according to at least one embodiment of the invention is an interactive dummy of a handle such as a Olympus GIF-HQ190 series endoscope the invention is equally suited for a handle emulating any kind of endoscopic instrument.

According to at least one exemplary embodiment the cradle is suspended on the base by flexible members, some of which comprise a force sensor, such as a strain gauge. However, it is also possible that all of the flexible members comprise force sensors or only one of them. The number of sensors, relative sensor geometry and the individual arrangements of the sensors may be adapted to achieve a varying degree of freedom in terms of direction, amplitude and/or torque. For example, one force sensor may be arranged to sense an exerted force in the longitudinal direction as the instrument is pushed or pulled relative to the frame and support arrangement, while a plurality of sensors in combination may be arranged at various positions between the base and the cradle to detect longitudinal, rotational and/or lateral forces.

Alternatively the cradle may be arranged to the base along a rail or plurality of rails, having force sensors detecting the force along the rail. Yet another solution would be to arrange the cradle on a low friction surface on the base.

The skilled person realizes that the use of two ball bearings for rotational suspension of the support arrangement represents one possible embodiment, it would also be possible to have a single, central bearing or several bearings along the axis A. The configuration of the friction wheels in relation to the actuators may be varied, as well as the number of actuators and the use of transmission direct drive. For example one actuator may be used to operate both friction wheels. Similarly, the actuator for the force feedback on rotational movement of the tubular member may for example be a brake actuator.

The pinching force exerted by the friction wheels on the tubular member may be achieved without spring loaded pretension, for example an actuator may adjust the position of the wheels, a clock spring connecting friction wheel and motor may provide individual suspension for each friction wheel or the wheels may be interconnected by at least one spring. Similarly to vehicular wheels, the friction wheels may have varying patterns to improve friction depending on for example the type or size tubular member. The shape or depth of the circumferencing groove may also be varied. The diameter of the friction wheels may be adapted.

The tube 17 may with some adaptations easily be replaced by a lattice structure or profile of similar format and dimension.

## Claims

1. A user interface for a tactile feedback endoscopic simulation executed on a computer system (3) comprising:
an instrument (5) having a handle (7) and a tubular member (8),
a frame (10),
a support arrangement (11), being rotatably arranged in relation to said frame, and being arranged to receive said tubular member along an axis A, said support arrangement comprising:
two friction wheels (19a, 19b), in frictional contact with opposing sides of said tubular member when said tubular member is received in said support arrangement,
a first rotational sensor (25a), arranged to detect a rotation of at least one of said two friction wheels, and
at least one actuator (22a, 22b), operatively connected to said friction wheels, wherein said user interface further comprises a force sensor, arranged to detect a force between said support arrangement and said frame, and
a controller (9) arranged to receive a desired tactile feedback from said computer system and a sensor signal from said force sensor representative of an applied force, and arranged to control said actuator to operate said friction wheels to provide said desired tactile feedback.

2. The user interface according to claim 1, wherein the support arrangement comprises a tube (17) into which said tubular member is insertable, said tube having openings (18a, 18b) on opposing sides providing access to said tubular member for said friction wheels.

3. The user interface according to claim 1, wherein each friction wheel (19a, 19b) is arranged on a pivotable arm (20a, 21 a, 20b, 21 b), so that said friction wheel is movable into contact with said tubular member.

4. The user interface according to claim 3, wherein each pivotable arm is operatively connected to a linkage mechanism comprising:
a slider (28), being slidably arranged along said axis A, and
two link brackets (30a, 30b), each link bracket having a first end pivotally connected with said slider, and a second end pivotally connected to one of said arms, respectively,
so that, when said slider (28) is moved along axis A, the friction wheels are pressed against the tubular member (8).

5. The user interface according to claim 4, wherein said slider is spring loaded to provide pretension such that said friction wheels are resiliently pressed toward each other.

6. The user interface according to any one of claims 1-3, further comprising at least one spring interconnecting said friction wheels such that said friction wheels are resiliently pressed toward each other.

7. The user interface according to any of the preceding claims, said frame (10) further comprising a base (13) and a cradle (14) for suspending said support arrangement (11), wherein said force sensor (15) is provided between said base and said cradle.

8. The user interface according to any of the preceding claims, wherein said at least one actuator (22a, 22b) is connected to said friction wheels (19a, 19b) with at least one transmission.

9. The user interface according to any of the preceding claims, further comprising a second rotational sensor (X) arranged to detect a rotation of said support arrangement (11) relative to said frame (10), wherein a rotational movement of said instrument around said axis A is transferred from said tubular member (8) to said support arrangement by said friction wheels (19a, 19b).

10. The user interface according to any of the preceding claims, further comprising a further actuator (32) arranged to provide force feedback for movement of said tubular member (8) around said axis A.

11. A method for controlling haptic feedback in a system for simulating an endoscopic procedure, said system comprising an instrument (5) having a tubular member (8) insertable into a support arrangement (11), said method comprising:
determing a desired feedback force,
detecting an actual force applied to said tubular member (8),
comparing said desired feedback force with said actual force, to provide an error signal, and
based on said error signal, controlling an actuator operatively connected to friction wheels in frictional contact with said tubular member (8), to thereby provide said desired feedback force.
